# EUROPEAN PATENT SPECIFICATION

(11) **EP 0 616 740 B1**
(45) Date of publication and mention of the grant of the patent: **24.07.1996**
(21) Application number: 92924817.7
(22) Date of filing: 10.12.1992
(51) Int. Cl.: H02M 3/335, G05F 1/38

(54) **DC-TO-DC CONVERTER**
GLEICHSTROMUMRICHTER
TRANSFORMATEUR D'INTENSITE POUR COURANT CONTINU

(30) Priority: 10.12.1991 GB 9126184
(43) Date of publication of application: 28.09.1994
(73) Proprietor: VALOR ELECTRONICS INC., San Diego, CA 92131-1642 (US)
(72) Inventor: ATTWOOD, Brian Ernest, Horsham, West Sussex RH12 1DQ (GB)
(74) Representative: Pacitti, Pierpaolo A.M.E.
(86) International application number: GB9202297
(87) International publication number: WO9312577

(56) References cited:
- EP-A- 0 123 098
- US-A- 4 642 743

## Description

This invention relates to dc-to-dc converters, particularly converters suitable for large-scale production at low cost. The invention is particularly directed at low power applications, but may also be applied to higher power applications.

Low cost, low power dc-to-dc converters are commonly used as regulated power supplies in computer circuits and the like, and comprise basically a switching circuit, a transformer and an output filter. Our European Patent Application EP 0,481,682A (published after the priority date of the present application) describes converters operating in resonant reset mode at about 1MHz and using an integrated magnetic structure which may be in the form of a simple balun. One object of the present invention is to improve on that disclosure by providing an excellent degree of voltage regulation at low cost, and by producing very low power dissipation.

The use of magnetic amplifiers (magamps) as control elements in switch mode converters has previously been considered, but these have not been extensively used as they have required special quality ferrites and have been poor in terms of size and energy dissipation.

US-A-4,642,743 discloses a dc-to-dc converter having an isolation transformer having a primary and a secondary, switching means for switching an input voltage across the transformer primary, an output circuit across the transformer secondary which includes a low-pass filter; and regulating means comprising a magnetic amplifier connected between the transformer secondary and the low-pass filter, and means for applying a clamped bias voltage to the magnetic amplifier to limit the flux excursion therein.

The present invention improves on such prior art, and is characterised in that the magnetic amplifier has a main winding connected in series with the secondary of the isolation transformer and an auxiliary winding connected across the input of the low-pass filter whereby transformer secondary voltage is applied to the low-pass filter when the magnetic amplifier is saturated and a pedestal voltage is applied to the low-pass filter at other times.

The provision of the pedestal voltage reduces the flux swing while retaining full control of the output voltage.

Embodiments of the invention will now be described, by way of example, with reference to the drawings, in which:-
Fig. 1 is a circuit diagram of a prior art converter using a magamp;
Fig. 2 is a B-H curve illustrating the operation of the circuit of Fig. 1;
Fig. 3 is a circuit diagram of a first embodiment of the present invention;
Fig. 4 is a B-H curve illustrating the operation of the circuit of Fig.3;
Figs. 5A and 5B are output voltage waveforms illustrating the operation of the circuit of Fig. 3;
Figs. 6A and 6B are plan and side views, respectively, of a ferrite toroid for use in the circuit of Fig. 3;
Fig. 7 is a circuit diagram of an alternative embodiment; and
Fig. 8 is a circuit diagram of another embodiment.

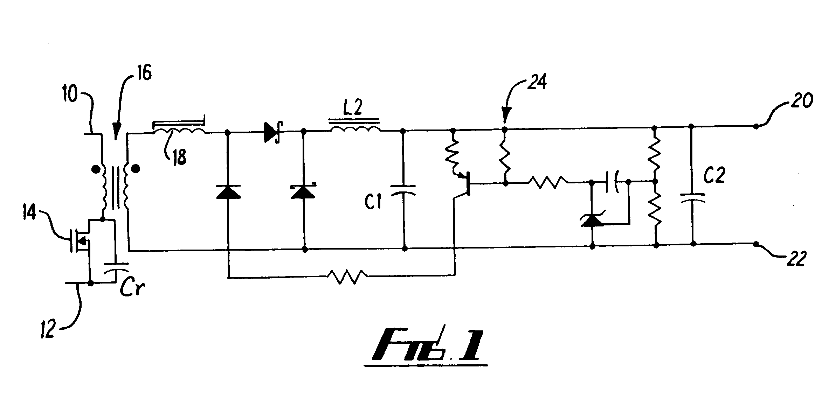

Fig. 1 shows a prior art converter. Input d-c voltage on lines 10, 12 is switched by MOSFET 14 to apply square waves to a transformer 16. The transformer 16 is reset by a resonant circuit comprising the transformer 16, the MOSFET 14 and a reset capacitor Cr. The output of transformer 16 provides a d.c. output at terminals 20, 22 via a low-pass filter formed by L2, C1 and C2. Regulation is provided by a magamp arrangement comprising a magamp 18 and a reset circuit 24.

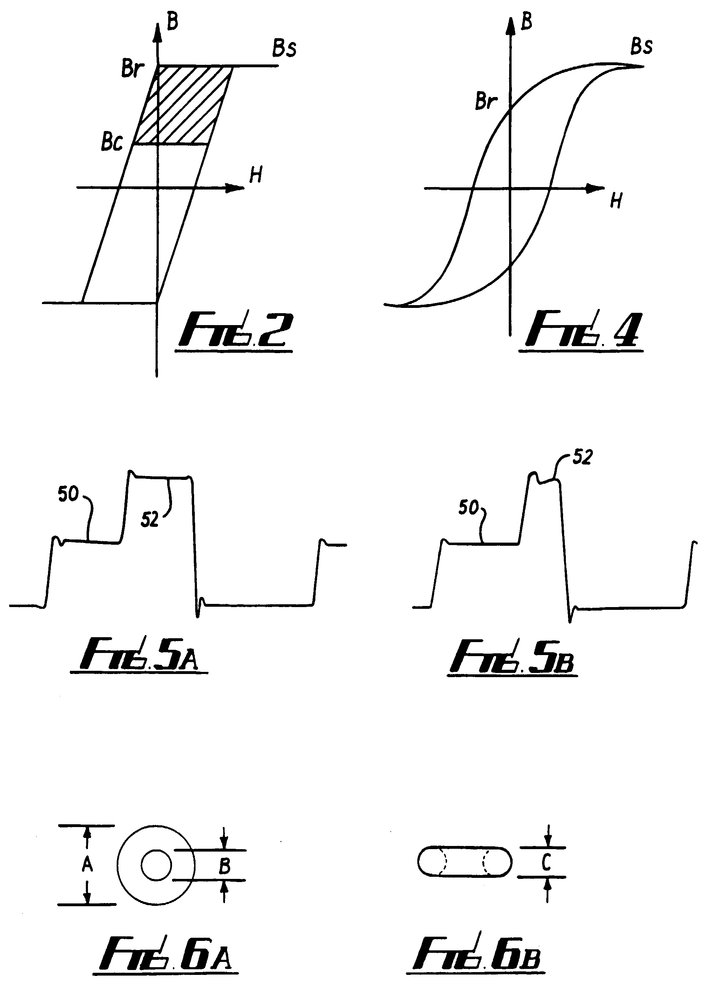

With this circuit, when the primary MOSFET 14 turns off, the secondary voltage of the transformer 16 switches to -Vsec. The current in the core of the magamp 18 will then ramp down towards zero and if no reset were present would actually reach zero with the magamp flux moving to the residual flux point Br (see Fig. 2). When reset is applied to the magamp core from the reset circuit 24 via reset diode 26, the voltage across the magamp core will be Vsec - Vbias, with the result that during the remainder of the off time the magamp core will be reverse biased to a negative magnetizing current and its flux density will be reset to a value Bc lower than Br. When the MOSFET 14 turns on again, the magamp core is not in saturation and, depending on how far it has been reverse biased, the core will block a certain quantity of Volt-seconds, thus allowing control of the output voltage.

It will be seen that, in this system, the flux excursion is large from Bs to Br and then to Bc with control occurring between Br and Bc. This leads to a high degree of dissipation and in practice requires the use of expensive special-purpose ferrites having a square-loop B-H characteristic, to avoid the need for large reset currents.

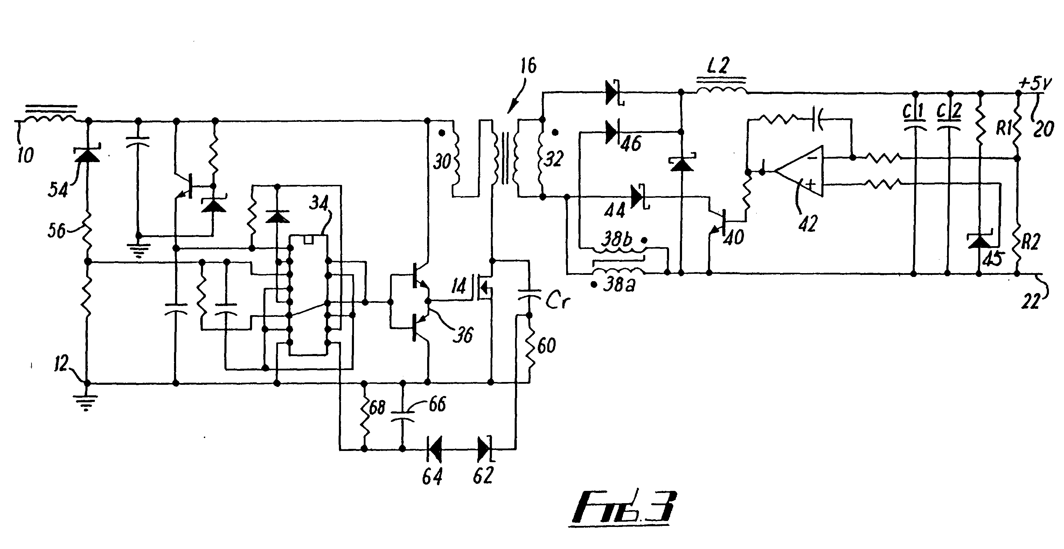

Turning to the embodiment of the present invention shown in Fig. 3, the basic structure of the circuit is similar to that disclosed in our above-referenced EP 0,481,682A, the disclosure of which is incorporated herein by reference. Briefly stated, a single integrated magnetic structure, suitably in the form of a balun, is used to provide the coupling transformer 16, the output low-pass filter choke L2, and primary and secondary inductors 30, 32. The main switching MOSFET 14 is controlled by a 4049 i.c. 34 operating as an oscillator, preferably at 1 MHz, via an emitter-coupled switching stage 36 (which may be omitted if a suitable MOSFET is used, such as a 2VN4210A).

The present invention differs from the circuits disclosed in EP 0,481,682A in that the secondary uses a magamp 38 to control regulation. The magamp 38 has a main winding 38a which is operated in set mode; it is clamped to the bias voltage Vbias applied across it by transistor 40 and series diode 44. The voltage across the magamp 38 no longer has the large excursion of the total secondary voltage swing Vsec-Vbias, and the magamp 38 is effectively clamped to a maximum voltage determined solely by the bias voltage.

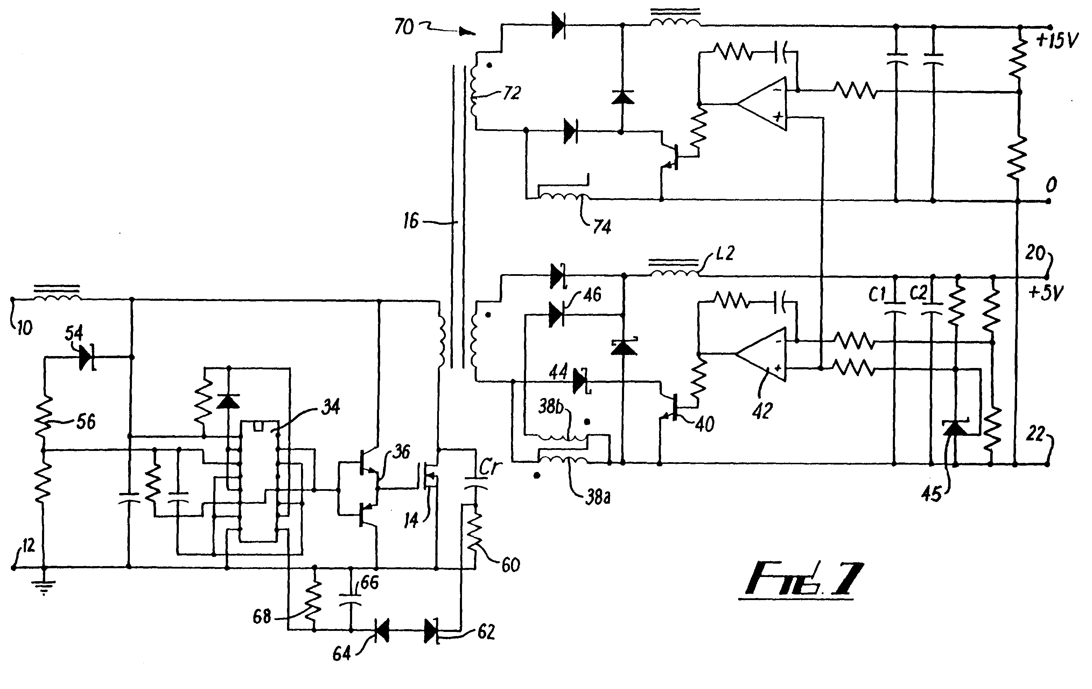

In this case, the total Volt-seconds across the magamp is Vbias x Ton, as opposed to (Vsec-Vbias) x Ton for the reset case. This gives a dramatic reduction in flux swing, and the effective control of the output occurs over the range Br - Bs. As seen in Fig. 4, by using an ordinary ferrite material with a non-square B-H loop, the use of the Br-Bs range for control is very effective.

Returning to Fig. 3, the bias voltage on the magamp 38 is controlled by the signal applied to the base of transistor 40, which is derived by operational amplifier 42 from a reference input from Zener diode 45 and an output voltage signal from resistor chain R1, R2.

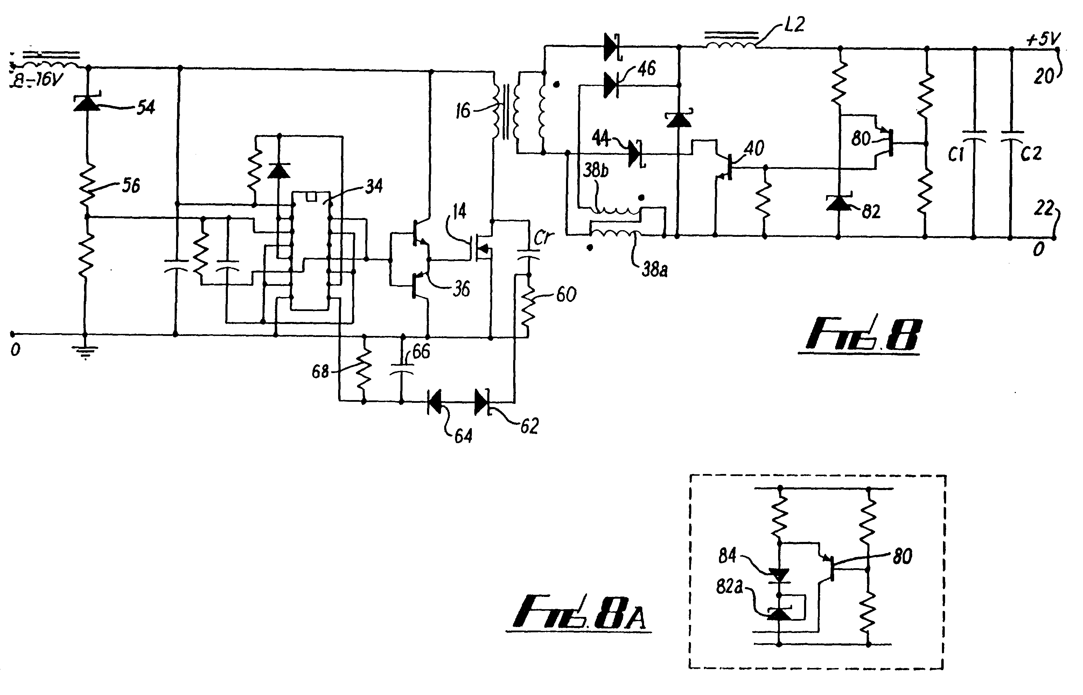

The magamp 38 has an auxiliary winding 38b connected to provide a pedestal voltage in the output waveform. The auxiliary winding 38b is returned to the switched input to the low-pass filter via diode 46. The result is illustrated in Fig. 5, in which Fig. 5A shows the voltage input to the low-pass filter at a 5W load, and Fig. 5B the same input at a 0.5W load. It will be seen that in each case there is a pedestal voltage 50 resulting from the operation of the auxiliary winding 38B, and a superimposed pulse 52 resulting from the operation of the main winding 38a, the length of the pulse 52 varying according to load. The length of the superimposed pulse 52 can vary from zero to 100% of the pedestal on time.

The use of the pedestal voltage feature reduces the flux swing still further while retaining full control of the output voltage. The ratio of pedestal height to total height in the voltage waveform is a function of the turns ratio of the main and auxiliary windings of the magamp 38. In the embodiment shown the turns ratio is 1:1 which gives total height: pedestal height of 2:1. The maximum control range will also be 2:1 which is more than adequate for most applications.

For optimum overall performance it is also preferred to use feedforward on the primary: this extends the total control range to nearly 3:1 and at the same time reduces the flux density in the main isolation transformer. This feedforward is very simply obtained by a series Zener diode 54 and resistor 56 connected between the input bus 10 and the timing input of the oscillator 34.

The pedestal voltage arrangement has a further advantage in that it simplifies start-up. If only a singe magamp winding were used, it would be necessary to provide a separate starting arrangement (which might simply be a shunt resistor).

The core of the magamp 38 in this circuit can be of surprisingly small size, and of extremely low cost owing to the small size and non-square-loop material. In the foregoing embodiment, the windings 38a and 38b are each ten turns wound on a ferrite toroid. Fig. 6 shows the toroid 38c, the dimensions of which in this embodiment are A = 4 mm, B = 2 mm, C + 2 mm. This embodiment was designed to handle 5W, but can handle up to 10W, the power dissipation is only some mW, and at nominal input voltage, 5W load and 1 MHz switching frequency the temperature rise of the toroid 38c was 14°C.

The foregoing system is very cost effective, simple to make, and has a regulation performance of 0.5% to 1.0% over any combination of 2:1 input voltage range and 10:1 power range. It is also very temperature tolerant: changes of only a few mV in output voltage have been measured over the wide range of -40°C to +70°C.

A further advantage of the foregoing circuit is that it has an excellent transient response. In the embodiment shown, the transient response to a step change in load is of the order of 20 microseconds, whereas prior art circuits have a transient response between 100 microseconds and 1 millisecond. The basis for this good transient response is the fact that the transient response is controlled only by the loop gain of the secondary magamp circuitry which, by its very simple nature and high speed capability, does not have any excessive unwanted phase shifting components inherent in its design; components of this nature would normally be detrimental to good transient response. The transient response is thus also helped by the fact that the control is entirely on the secondary side.

The present embodiment also provides protection against short circuits and overload.

Referring now to Fig. 3, a resistor 60 is connected in series with the resonating capacitor Cr. The voltage across resistor 60, which is a function of load current, is sampled and peak rectified by a Zener diode 62 and diode 64 in series. The rectified signal is filtered by a capacitor 66 and resistor 68, and the resultant signal is applied to a spare gate input of i.c. 34, the gate output being applied to the ring-of-three oscillator section of the i.c. 34. The gate threshold on a CMOS device is relatively tightly controlled and is typically 40% of the supply voltage. In operation, the current limit point is set by the parallel resistor 60 such that no current limiting occurs until approximately 20% overload. Beyond this, the d.c. voltage applied to the control gate progressively limits the on time of the system to reduce the output voltage and current to safe levels, even under short circuit conditions.

This arrangement makes use of the fact that, with resonant reset switching and a high switching frequency, the rise time of the leading edge of the MOSFET drain voltage is a function of the output current. Effectively, the circuit described acts to differentiate the leading edge to produce a voltage pulse having an amplitude proportional to load current. Other means of thresholding and foldback may be used to produce the same result.

This protection system is very simple and efficient, and well suited to low cost production. It also has the great advantage of being entirely on the primary side of the converter and thus avoiding signal transfer across the isolation boundary provided by the isolation transformer.

Fig. 7 shows a further embodiment providing two output voltages. This is similar to the foregoing embodiment and like parts are denoted by like references. A second output channel 70 is provided, having a secondary winding 72 wound on the common balun. A magamp 74 for this channel is wound on a separate toroid similar to that of the magamp 38. The magamp 74 has no auxiliary winding; start-up is achieved via the main channel. A pedestal voltage is not used in channel 70 in the circuit shown, but could be incorporated by use of an auxiliary magamp winding.

Fig. 8 shows another variation on the circuit of Fig. 3. The operational amplifier 42 is replaced by transistor 80 and Zener diode 82. This somewhat degrades voltage and temperature characteristics, but reduces cost and allows surface-mount devices to be used throughout. Fig. 8A shows a modification which improves on the voltage and temperature stability of Fig.8, the simple Zener diode 82 being replaced by a TL 431 Zener device 82a to give a more accurate breakdown voltage, used with an oppositely-poled diode 84 to cancel temperature effects of the Vbe of transistor 80.

Modifications may be made within the scope of the invention as defined in the Claims. For example, it would be possible to fabricate the magamp as part of the integrated magnetic structure of the converter.

## Claims

1. A dc-to-dc converter comprising an isolation transformer (16) having a primary (30) and a secondary (32), switching means (14) for switching an input voltage across the transformer primary (30), and an output circuit across the transformer secondary (32) which includes a low-pass filter (L2, C1, C2); the converter having regulating means comprising a magnetic amplifier (38) connected between the transformer secondary (32) and the low-pass filter (L1, C1, C2), and means (40, 42, 44) for applying a clamped bias voltage to the magnetic amplifier (38) to limit the flux excursion in the magnetic amplifier (38);
characterised in that the magnetic amplifier (38) has a main winding (38a) connected in series with the secondary (32) of the isolation transformer (16) and an auxiliary winding (38b) connected across the input of the low-pass filter (L2, C1, C2) whereby transformer secondary voltage is applied to the low-pass filter when the magnetic amplifier is saturated and a pedestal voltage is applied to the low-pass filter at other times.

2. A converter according to Claim 1, in which the means for applying the clamped bias voltage comprises a transistor (40) having its main path in series with a diode and responsive to the converter output voltage to vary the bias voltage.

3. A converter according to Claim 2, in which the transistor (40) is controlled by an operational amplifier connected to said output voltage and to a voltage reference.

4. A converter according to any preceding Claim, including a second transformer secondary (72) which supplies a second output circuit (70), the second output circuit (70) including a second magnetic amplifier (74) and means for applying a clamped bias voltage to the second magnetic amplifier.

5. A converter according to any preceding Claim, in which the magnetic amplifier (38;74) has a core in the form of a toroid of a ferrite material having a non-square-loop B-H characteristic.

6. A dc-to-dc converter according to any preceding claim;in which the switching means operates in resonant reset mode and includes a switching device (14), an oscillator (34) driving the switching device, and a reset capacitor (Cr) connected in parallel with the switching device (14); the converter having a protection circuit comprising means (60) for generating a signal representative of the rise time of the voltage on the reset capacitor, and threshold means (62) responsive to said signal to control operation of the oscillator (34) when said signal exceeds a predetermined threshold.

7. A converter according to Claim 6, in which the switching means is a MOSFET device (14) operating at 0.5 - 1.5 MHz and the means for generating said signal comprises a resistor (60) in series with the reset capacitor (Cr), the threshold means comprises a Zener diode (62) sampling the voltage on the resistor (60), and the Zener diode output is differentiated and applied to a gate circuit controlling the oscillator.

## Patentansprüche

1. Gleichstromwandler, bestehend aus einem Isoliertransformator (16) mit einer Primärseite (30) und einer Sekundärseite (32), einer Schalteinrichtung (14) zum Schalten einer Eingangsspannung über die Primärseite (30) des Transformators und einer Ausgangsschaltung über der Sekundärseite (32) des Transformators, die einen Tiefpaßfilter (L2, C1, C2) aufweist, wobei der Wandler eine Regeleinrichtung hat, die einen Magnet-Verstärker (38) aufweist, der zwischen der Sekundärseite (32) des Transformators und dem Tiefpaßfilter (L1, C1, C2) angeschlossen ist, sowie eine Einrichtung (40, 42, 44) zum Anlegen einer angeklemmten Vorspannung an den Magnet-Verstärker (38) für eine Begrenzung der Flußauslenkung in dem Magnet-Verstärker (38);
dadurch gekennzeichnet, daß der Magnet-Verstärker (38) eine Hauptwicklung (38a) hat, die in Reihe mit der Sekundärseite (32) des Isoliertransformators (16) angeschlossen ist, und eine Hilfswicklung (38b), die über den Eingang des Tiefpaßfilters (L2, C1, C2) angeschlossen ist, wodurch die Sekundärspannung des Transformators an den Tiefpaßfilter angelegt ist, wenn der Magnet-Verstärker gesättigt ist, und in den übrigen Zeiten eine Sockelspannung an den Tiefpaßfilter angelegt ist.

2. Wandler nach Anspruch 1, bei welchem die Einrichtung zum Anlegen der angeklemmten Vorspannung einen Transistor (40) aufweist, dessen Hauptstrecke in Reihe mit einer Diode liegt und auf die Wandlerausgangsspannung anspricht, um die Vorspannung zu verändern.

3. Wandler nach Anspruch 2, bei welchem der Transistor (40) durch einen Operationsverstärker gesteuert wird, der mit der Ausgangsspannung und mit einer Spannungsreferenz verbunden ist.

4. Wandler nach einem der vorhergehenden Ansprüche, welcher eine zweite Sekundärseite (72) des Transformators aufweist, die eine zweite Ausgangsschaltung (70) beliefert, wobei die zweite Ausgangsschaltung (70) einen zweiten Magnet-Verstärker (74) und eine Einrichtung zum Anlegen einer angeklemmten Vorspannung an den zweiten Magnet-Verstärker aufweist.

5. Wandler nach einem der vorhergehenden Ansprüche, bei welcher der Magnet-Verstärker (38; 74) einen Kern in der Ausbildung eines Toroids aus einem Ferritmaterial mit der Eigenschaft einer nicht rechtwinkligen magnetischen Hysteresisschleife hat.

6. Gleichstromwandler nach einem der vorhergehenden Ansprüche, bei welchem die Schalteinrichtung in dem Modus der Resonanzrückstellung arbeitet und ein Schaltgerät (14) aufweist, sowie einen das Schaltgerät antreibenden Oszillator und einen parallel zu dem Schaltgerät (14) angeschlossenen Rückstellkondensator (Cr), wobei der Wandler eine Schutzschaltung hat, die eine Einrichtung (60) zur Erzeugung eines Signals aufweist, das für die Antiegzeit der Spannung an dem Rückstellkondensator repräsentativ ist, und eine Schwellwerteinrichtung (62), die auf das Signal für eine Steuerung des Betriebs des Oszillators (34) anspricht, wenn das Signal einen vorbestimmten Schwellwert übertrifft.

7. Wandler nach Anspruch 6, bei welchem die Schalteinrichtung ein MOSFET Gerät (14) ist, das bei 0.5 - 1.5 MHz arbeitet, und die Einrichtung zur Erzeugung des Signals einen Widerstand (16) in Reihe mit dem Rückstellkondensator (Cr) aufweist, die Schwellwerteinrichtung eine Zener-Diode (62) aufweist, welche die Spannung an dem Widerstand (60) abtastet, und der Ausgang der Zener-Diode differenziert und an eine Torschaltung angelegt ist, welche den Oszillator steuert.

## Revendications

1. Convertisseur de courant continu comprenant un transformateur d'isolement (16) avec un primaire (30) et un secondaire (32), un moyen de commutation (14) pour commuter une tension d'entrée au primaire du transformateur (30), et un circuit de sortie au secondaire du transformateur (32) comportant un filtre passe-bas (L2, C1, C2) ; le convertisseur étant doté d'un moyen de régulation comprenant un amplificateur magnétique (38) branché entre le secondaire du transformateur (32) et le filtre passe-bas (L1, C1, C2) et un moyen (40, 42, 44) pour appliquer une tension de polarisation de blocage à l'amplificateur magnétique (38), afin de limiter l'excursion du flux dans l'amplificateur magnétique (38) ;
caractérisé en ce que l'amplificateur magnétique (38) est doté d'un enroulement principal (38a) relié en série avec le secondaire (32) du transformateur d'isolement (16) et d'un enroulement auxiliaire (38b) relié en parallèle sur l'entrée du filtre passe-bas (L2, C1, C2), la tension secondaire du transformateur étant appliquée au filtre passe-bas lorsque l'amplificateur magnétique est saturé, une tension de base étant appliquée au filtre passe-bas dans le cas contraire.

2. Convertisseur selon la revendication 1, dans lequel le moyen servant à appliquer la tension de polarisation de blocage comprend un transistor (40) dont le circuit principal est en série avec une diode et qui, en réponse à la tension de sortie du convertisseur, fait varier la tension de polarisation.

3. Convertisseur selon la revendication 2, dans lequel le transistor (40) est commandé par un amplificateur opérationnel relié à ladite tension de sortie et à une tension de référence.

4. Convertisseur selon l'une quelconque des revendications précédentes, comportant un deuxième enroulement secondaire de transformateur (72) qui alimente un deuxième circuit de sortie (70), le deuxième circuit de sortie (70) comportant un second amplificateur magnétique (74) et un moyen pour appliquer une tension de polarisation de blocage au second amplificateur magnétique.

5. Convertisseur selon l'une quelconque des revendications précédentes, dans lequel l'amplificateur magnétique (38 ; 74) est doté d'un noyau magnétique en forme de tore en matériau ferritique ayant une caractéristique d'aimantation à boucle d'hystérésis non rectangulaire.

6. Convertisseur de courant continu selon l'une quelconque des revendications précédentes, dans lequel le moyen de commutation fonctionne en mode de remise à zéro par résonance et comporte un dispositif de commutation (14), un oscillateur (34) pilotant le dispositif de commutation et un condensateur de remise à zéro (Cr) raccordé en parallèle sur le dispositif de commutation (14) ; le convertisseur étant doté d'un circuit de protection comprenant un moyen (60) pour générer un signal représentatif du temps d'établissement de la tension sur le condensateur de remise à zéro et un moyen de limitation (62) répondant audit signal pour commander le fonctionnement de l'oscillateur (34) lorsque ledit signal dépasse un seuil déterminé.

7. Convertisseur selon la revendication 6, dans lequel le moyen de commutation est un dispositif MOS à effet de champ (14) fonctionnant entre 0,5 et 1,5 MHz, le moyen pour générer ledit signal comprend une résistance (60) en série avec le condensateur de remise à zéro (Cr), le moyen de limitation comprend une diode zener (62) qui prélève la tension aux bornes de la résistance (60), la sortie de la diode zener étant différenciée et appliquée à un circuit de gâchette commandant l'oscillateur.
